# EUROPÄISCHE PATENTANMELDUNG

(11) **EP 0 623 942 A1**
(43) Veröffentlichungstag der Anmeldung: **09.11.1994**
(21) Anmeldenummer: 93120762.5
(22) Anmeldetag: 23.12.1993
(51) Int. Cl.: H01H 19/54

(54) **Codiervorrichtung**

(30) Priorität: 20.04.1993 DE 9305865 U
(71) Anmelder: FRITZ HARTMANN GERÄTEBAU GMBH & CO KG, D-91083 Baiersdorf (DE)
(72) Erfinder: von Ende, Hermann, D-90480 Nürnberg (DE)
(74) Vertreter: Tergau, Enno, Dipl.-Ing.

(57) **Zusammenfassung**

Eine Codiervorrichtung enthält einen Kontaktträger (3) und eine Codierscheibe (4), die in einer Mehrzahl von Drehstellungen relativ zum Kontaktträger (3) zur Einstellung entsprechender Codierungen einstellbar ist. Ferner ist die Codierscheibe (4) zwischen einer Inaktivstellung, in der sie vom Kontaktträger (3) beabstandet und keine Codierung wirksam ist, und einer Aktivstellung verstellbar, in der über die Codierscheibe (4) eine der Drehstellung der letzteren entsprechende Codierung auf dem Kontaktträger (3) eingestellt ist. Dadurch, daß die Codierscheibe (4) zur Codierauswahl in der Inaktivstellung in verschiedene Drehstellungen einstellbar ist, kann die Codierauswahl potentialfrei erfolgen.

## Beschreibung

Die Erfindung betrifft eine Codiervorrichtung und insbesondere einen durch Tastdruck aktivierbaren Codierschalter oder Codiertaster.

Das Wesen ganz prinzipiell von Codierschaltern und ihre Funktionsweise sind z. B. aus der DE 31 36 045 C2 bekannt. Ein solcher Codierschalter enthält als wesentliches Bestandteil eine Codierscheibe und eine Wählscheibe, mit der je nach Drehstellung der Wählscheibe bis zu 16 unterschiedliche Codierungen einstellbar sind. Es ist auch eine andere Anzahl von Codierungen möglich. In der Praxis sind 10 und 16 Codierungsmöglichkeiten üblich.

Aus der deutschen Gebrauchsmusterschrift 1 736 669 ist ein Mehrwege-Drehschalter mit einem Druckknopftaster insbesondere für motorbetätigte Haushaltsgeräte bekannt. Der Druckknopftaster ist in dem Drehschaltergriff zentral angeordnet und wirkt über einen Stößel oder dergleichen auf einen mit einem Gegenkontakt zusammenarbeitenden Kontakthebel ein. Die Betätigung des Druckknopftasters ist nur in einer Stellung des Drehschalters, nämlich in dessen Aus-Stellung möglich. Diese Anordnung hat daher u. a. den Nachteil, daß mittels des Druckknopftasters nur eine fest vorgegebene Schaltung aktiviert werden kann. Das Umschalten des Drehschalters in verschiedene Ein-Stellungen erfolgt in weiterhin nachteiliger Weise, während die entsprechende Codierscheibe mit der Betriebsspannung beaufschlagt ist. Dies führt beim Schalten zu hohen Spannungsbelastungen der Codierscheibe und des ganzen Gerätes.

Die DE 27 05091 A1 offenbart einen Drehschalter mit Druckknopfbetätigung für Fernsehgeräte. Dabei ist ein zweiseitiger Kontaktrotor zwischen zwei Aktivstellungen hin- und herschaltbar, um dadurch die Anzahl der möglichen Einstellungen zu vergrößern. Ein potentialfreies Umschalten zwischen verschiedenen Codiereinstellungen ermöglicht dieser Drehschalter nicht, so daß auch hierbei eine Spannungsbelastung und insbesondere Spannungsspitzen auftreten, die die Codierscheibe und das gesamte Gerät belasten und deren Lebensdauer verkürzen. Ferner enthält dieser Drehschalter keine Tasterfunktion.

Es ist die Aufgabe der vorliegenden Erfindung, eine gattungsgemäße Codiervorrichtung so weiterzubilden, daß sie eine potentialfreie Einstellung verschiedener Codierungen ermöglicht.

Diese Aufgabe wird mit einer Codiervorrichtung gemäß Anspruch 1 gelöst.

Die erfindungsgemäße Codiervorrichtung, die eine Codiertaster oder ein Codierschalter sein kann, zeichnet sich dadurch aus, daß sie potentialfrei auf die jeweilige Codierung einstellbar ist und erst nach vollzogener Auswahl der Codierung z. B. durch einen Tastdruck aktiviert wird, also die elektrischen Kontakte herstellt.

Die Codiervorrichtung enthält einen Kontaktträger und eine Codierscheibe, die in einer Mehrzahl von Drehstellungen relativ zum Kontaktträger zur Einstellung entsprechender Codierungen einstellbar ist. Ferner ist die Codierscheibe zwischen einer Inaktivstellung, in der sie vom Kontaktträger beabstandet und keine Codierung wirksam ist, und einer Aktivstellung verstellbar, in der über die Codierscheibe eine der Drehstellung der letzteren entsprechende Codierung auf dem Kontaktträger eingestellt ist. Dadurch, daß die Codierscheibe zur Codierauswahl in der Inaktivstellung in verschiedene Drehstellungen einstellbar ist, kann die Codierauswahl potentialfrei erfolgen.

Spannungsbelastungen während des Verstellens oder Umschaltens der Codierscheibe treten in deren Inaktivstellung nicht auf, was sich verlängernd auf die Lebensdauer des gesamten Gerätes aus, das über die Codiervorrichtung gesteuert wird. Insbesondere werden die Kontakte in der Codiervorrichtung, worin üblicherweise ein wesentlicher Schwachpunkt bei einer elektrischen Schaltung liegt, elektrisch nicht übermäßig belastet, was die Funktionssicherheit und Langlebigkeit der Codiervorrichtung verbessert.

Die erfindungsgemäße Codiervorrichtung ermöglicht ferner, daß grundsätzlich jede wählbare Codierung auch individuell zeitlich begrenzt durch eine Tastenbetätigung möglich ist, wenn die Codiervorrichtung als Codiertaster ausgebildet ist. Es gibt also nicht nur eine fest vorgegebene Schaltung, die mit dem Taster aktivierbar ist, sondern die Schaltungen, die über den Taster aktivierbar sein sollen, können durch Einstellen, d. h. Drehen der Codierscheibe vorgewählt werden. Dadurch wird der Vorteil erreicht, daß die erfindungsgemäße Codiervorrichtung ein sehr weites Anwendungsfeld eröffnet, wobei erstmals wählbare Steuerungen über Taster möglich sind.

Eine Drehwelle nach Anspruch 2 erleichtert in vorteilhafter Weise die Handhabung der Codierscheibe, wenn diese zur Drehverstellung koaxial mit der Drehwelle verbunden ist, mittels der die Codierscheibe ferner vorzugsweise zwischen der Inaktiv- und der Aktivstellung verstellbar ist. Dabei ist ferner vorteilhaft, wenn die Drehwelle an einem freien Betätigungsende mit einer Rändelung versehen oder als Vielkantwelle ausgebildet ist, wie im Anspruch 3 angegeben ist. Die Drehwelle kann dadurch leicht mit Fingern gegriffen werden bzw. kann ein Stellrad oder eine Kurbel aufgesteckt werden.

Eine rastbare Codierscheibe nach Anspruch 4 ermöglicht in vorteilhafter Weise die definierte und sichere Einstellung von Codierungen. Dabei ist ferner bevorzugt, wenn gemäß Anspruch 5 eine der Codierscheibe zugeordnete Rastverzahnung vorgesehen ist, die mit zumindest einer Rastfeder zum Verrasten der Codierscheibe in der wenigstens einen Drehstellung zusammenwirkt. Diese Ausgestaltung ist besonders einfach und bevorzugt dadurch weiter zu bilden, daß zwei Rastfedern vorgesehen sind, die vorzugsweise als Blattfedern ausgebildet sind, wie im Anspruch 6 angegeben ist. Weiter kann entsprechend Anspruch 7 alternativ oder zusätzlich vorgesehen werden, daß an der Rastfeder zumindest eine Rastnocke vorgesehen ist, die bevorzugt eine mit der Rastverzahnung zusammenwirkende teilkugelkugelähnlich abgerundete Oberflächenform hat. Diese Ausführung ist besonders einfach herstellbar und gut schaltbar. Ferner auch kann bei den vorbeschriebenen Codiervorrichtungen nach Anspruch 8 die Rastverzahnung an der Drehwelle vorgesehen sein, wodurch in vorteilhafter Weise die Herstellung vereinfacht und die Betätigung weiter verbessert wird.

Das Verdrehen der Codierscheibe und somit Einstellen einer gewünschten Codierung kann besonders einfach durchgeführt werden, wenn, wie im Anspruch 9 angegeben ist, die Codierscheibe in ihre Inaktivstellung vorgespannt ist, was nach Anspruch 10 insbesondere mittels einer Druckfeder und bevorzugt durch eine Schraubendruckfeder erreicht wird.

Damit der Raum zwischen der Codierscheibe und dem Kontaktträger frei ist und bei der Gestaltung der Kontaktbahnen nicht auf eine Druckfeder zwischen der Codierscheibe und dem Kontaktträger Rücksicht genommen werden braucht, ist es vorteilhaft, wenn gemäß Anspruch 11 die Druckfeder einerseits am Ende eines Sackloches in der Drehwelle und andererseits an einem insbesondere in das Sackloch eingreifenden Führungsstift abgestützt ist, der bezüglich des Kontaktträgers ortsfest ist. Bevorzugt ist dabei, daß der Führungsstift ein kolbenartiges oberes Ende, das innerhalb des Sackloches längsverschiebbar geführt ist und an dem sich die Druckfeder abstützt, und einen unteren Stempel aufweist, der durch die Codierscheibe koaxial hindurchgeht und insbesondere an dem Kontaktträger abgestützt ist, wie im Anspruch 12 angegeben ist.

Zusätzlich oder alternativ kann nach Anspruch 13 die Codierscheibe durch die wenigstens eine Rastfeder in ihre Inaktivstellung vorgespannt sein. Dadurch kann entweder die Wirkung der Druckfeder verstärkt werden, was eine bessere Vorspannung hervorruft oder nur eine schwächere Druckfeder erforderlich macht, wobei auch die Langlebigkeit insgesamt verbessert wird, oder es kann ggf. auf die Druckfeder verzichtet werden, wobei die mindestens eine Rastfeder in vorteilhafter Weise sowohl die Vorspannung der Codierscheibe in die Inaktivstellung gewährleistet als auch den sicheren Rasteingriff in den wählbaren Codierstellungen sicherstellt. Beispielsweise kann die Vorspannwirkung mittels der Rastfeder so erreicht werden, daß die Drehwelle vorzugsweise als konusförmiger Ringbereich ausgebildete Auflaufeinrichtungen enthält, die mit der wenigstens einen Rastfeder so zusammenwirken, daß die Codierscheibe dadurch in ihre Inaktivstellung vorgespannt ist. Derartige Auflaufeinrichtungen nach Anspruch 14 können z. B. integral mit der Drehwelle ausgebildet sein, was eine günstige Herstellung und einen einfachen Betrieb ermöglicht.

Wenn die Codierscheibe in ihrer Aktivstellung verrastbar ist, wie im Anspruch 15 angegeben ist, wird durch die erfindungsgemäße Codiervorrichtung ein Codierschalter geschaffen, der potentialfrei schaltbar ist. Erst wenn die gewünschte Codierung eingestellt ist, wird die Codierscheibe aus ihrer Inaktivstellung in ihre Aktivstellung verstellt oder gedrückt, so daß durch den Kontakt der Codierscheibe mit dem Kontaktträger die eingestellte Codierung wirksam wird. Ohne Verrastungsmöglichkeit der Codierscheibe in ihrer Aktivstellung stellt die erfindungsgemäße Codiervorrichtung einen Codiertaster dar, bei dem die gewählte Codierung nur solange wirksam ist, solange die Codierscheibe in Kontakt mit dem Kontaktträger verstellt ist, was z. B. durch Drücken erreicht werden kann.

Wenn die Codiervorrichtung ein Gehäuse enthält, von dem bevorzugte Ausgestaltungen in den Ansprüchen 16 und 17 angegeben sind, ist es nach Anspruch 18 weiterhin vorteilhaft, wenn eine Dichtung, vorzugsweise in Form eines Dichtungsrings, vorgesehen ist, die das Gehäuse gegen die Drehwelle abdichtet. Dabei soll gemäß Anspruch 19 die Dichtung zwischen einem radial vorstehenden Ansatz der Drehwelle und einer die Gehäuseausnehmung flankierenden Gehäusestirnseite wirksam sein. Dadurch wird der Vorteil erreicht, daß zum einen die Codiervorrichtung nach außen abgedichtet ist, so daß keine Feuchtigkeit eindringen kann, die die Funktionssicherheit und Langlebigkeit der Codiervorrichtung verschlechtern würde, auch wenn die Codiervorrichtung in einer durch erhöhte Luftfeuchtigkeit oder Flüssigkeitsspritzer belasteten Umgebung eingesetzt wird, und daß zum anderen die Drehwelle abgedämpft geführt wird, was allgemein das Verstellen der letzteren verbessert.

In den Ansprüchen 20 und 21 sind bevorzugte Ausgestaltungen des Gehäuses im Zusammenhang mit einer Blattfeder als Rastfeder angegeben. Dadurch lassen sich die Blattfedern besonders einfach und sicher montieren.

Eine vorzugsweise Ausgestaltung der Codierscheibe ist in Anspruch 22 angegeben. Danach weist die Codierscheibe eine dem Kontaktträger zugewandte Kontaktoberfläche mit zumindest einer Kontaktbahn und im übrigen isolierenden Oberflächenbereichen auf, so daß bei einer Verstellung der Codierscheibe aus der Inaktiv- in die Aktivstellung in Druckrichtung die Codierscheibe mit ihrer wenigstens einen Kontaktbahn der Codierung entsprechende Kontakte des Kontaktträgers beaufschlagt. Dadurch werden verschiedene Codierungen besonders einfach erzeugt und einstellbar. Um bei der Verstellung möglichst sicher elektrisch leitende Verbindungen zwischen dem Kontaktträger und der Codierscheibe herzustellen, ist es nach Anspruch 23 vorteilhaft, wenn der Kontaktträger zumindest teilweise flexibel ist und/oder vorzugsweise wenigstens teilweise flexible Kontakte enthält, gegen die die Codierscheibe in der Aktivstellung in einer Druckrichtung andrückbar ist.

Weiterhin können Anzeigeneinrichtungen z. B. in Form einer Leuchtdiode vorgesehen sein, um beispielsweise die Aktivstellung der Codierscheibe zu signalisieren. Diese Ausführung gemäß Anspruch 24 ermöglicht den Vorteil, daß eine Bedienperson deutlich und leicht erkennbar auf den Betriebszustand der Codiervorrichtung hingewiesen wird. Eine entsprechende Anzeige kann alternativ oder zusätzlich zu der vorbeschriebenen beispielsweisen Ausführung auch für die Inaktivstellung und sogar für eine oder mehrere oder alle den entsprechenden Drehstellungen der Codierscheibe zugeordneten Codierungen vorgesehen sein.

Weitere vorteilhafte Ausgestaltungen und Weiterbildungen der Erfindung sind durch die übrigen Unteransprüche und deren Merkmalskombinationen angegeben.

Die Figuren zeigen nur ein Ausführungsbeispiel der Erfindung. Darin sind:
Fig. 1 eine Darstellung der wesentlichen Einzelteile des Tasters,
Fig. 2 ein Vertikalschnitt entlang der Schalterlängsachse,
Fig. 3 ein Schnitt entsprechend der Linie A-A in Fig. 2 mit einer Draufsicht auf den Kontakträger einer Codierscheibe mit einer Darstellung von Kontaktbahnen und von zwischen den dunkel dargestellten Kontaktbahnen in heller Darstellung gezeigten isolierenden Oberflächenbereichen,
Fig. 4 einen Vertikalschnitt analog Fig. 2 in kontaktierender Aktivstellung eines Tasters bzw. seiner Rastwelle, und
Fig. 4a eine vergrößerte Darstellung von Fig. 4.

Gleiche Teile sind in der Zeichnung und der darauf bezogenen Beschreibung mit gleichen Bezugszeichen versehen. Zum Zwecke der Klarheit sind nich in jeder Figur der Zeichnung alle sichtbaren Teile mit Bezugszeichen bezeichnet. Eine entsprechende Zuordnung ist dem Fachmann bei Ansehung der Zeichnung aber ohne weitere klar.

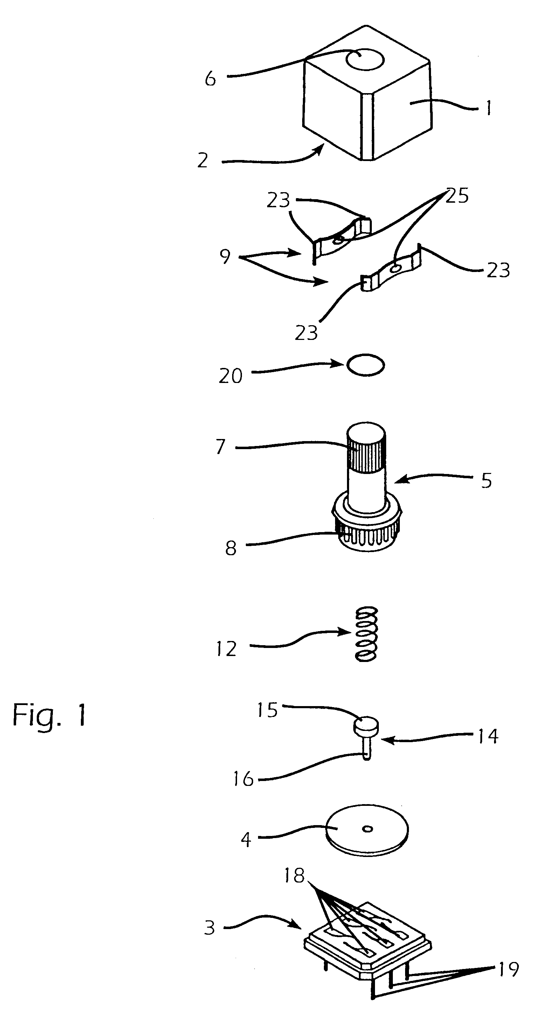

Der Schalter besteht im wesentlichen aus einem Gehäuse 1 und einem in dessen in Fig. 1 unten liegender Gehäuseöffnung 2 fest eingesetzten Kontaktträger 3 sowie einer drehbar gelagerten Codierscheibe 4. Dazu ist die Codierscheibe 4 mit nach unten gewandter Kontaktoberfläche (isolierender Oberflächenbereich 29 mit Kontaktbahnen 27) fest an das untere Ende einer als Rastwelle ausgebildeten Drehwelle 5 angesetzt. Die Rastwelle 5 ist in einer der Gehäuseöffnung 2 gegenüberliegenden Gehäuseausnehmung 6 drehbar gelagert. Sie ist im Bereich ihres aus dem Gehäuse 1 hinausstehenden Endes zur Erhöhung ihrer Griffigkeit mit einer Rändelung 7 ausgerüstet. Anstelle der Rändelung 7 kann die Rastwelle 5 dort auch als Vielkantwelle z. B. zum Aufstecken eines Griffrades oder eines anderweitigen Betätigungsgliedes ausgebildet sein.

Die Rastwelle 5 ist an ihrem innerhalb des Gehäuses 1 liegenden Umfang mit einer umfänglichen Rastverzahnung 8 als Teil eines Rastgesperres, insbesondere eines Federrastgesperres versehen. Die Rastverzahnung 8 wirkt mit mindestens einer Blattfeder 9 zusammen, die an einer Gehäuseinnenwand 10 in Richtung auf die Rastverzahnung 8 vorstehend und in letztere eingreifend fixiert ist.

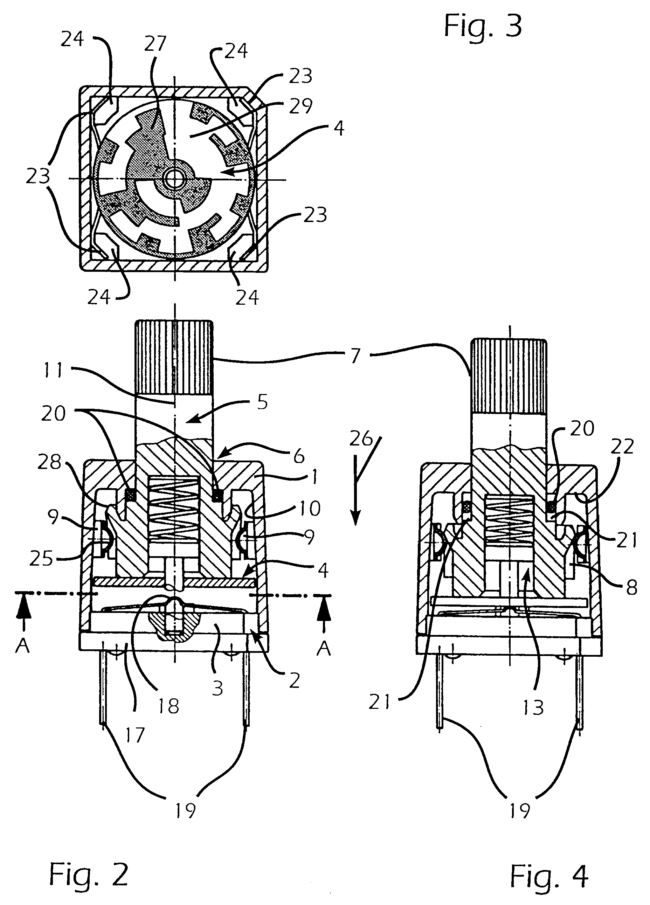

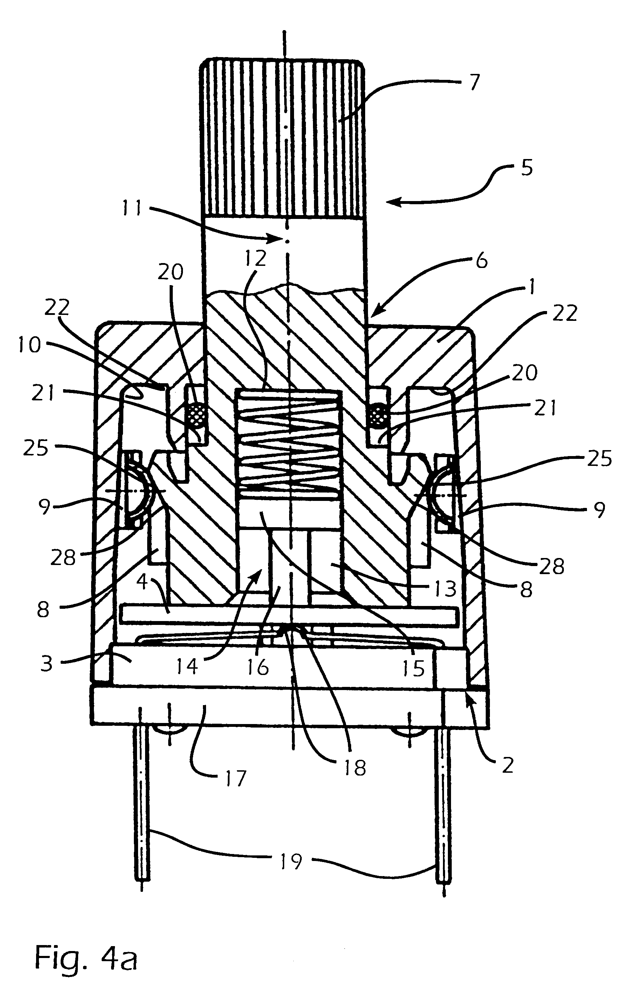

Wie in den Fig. 2, 4 und 4a zu sehen ist, ist die Rastwelle 5 um die Gehäuselängsachse 11 drehbar im Gehäuse 1 gelagert. Die Rastwelle 5 steht unter dem Druck einer axial wirksamen Druckfeder 12, die die Rastwelle 5 und dementsprechend die an ihrem unteren Ende fixierte Codierscheibe 4 außer Kontakt mit dem Kontaktträger 3, d. h. in ihrer Inaktivstellung hält. Die Druckfeder 12 liegt in einem Sackloch 13 am unteren Ende der Rastwelle 5. Sie stützt sich mit ihrem unteren Ende auf einem Führungsstift 14 ab, der mit einem kolbenartigen oberen Ende 15 innerhalb des Sackloches 13 längsverschiebbar geführt einliegt und sich mit seinem unteren Stempel 16 an dem Kontaktträger 3 bzw. an einer mit ihm fest verbundenen, äußeren Verschlußplatte 17 abstützt. Auf der gehäuseinneren Oberfläche des plattenförmigen Kontaktträgers 3 angeordnete Kontakte 18 sind mit ihren Anschlußenden 19 durch die Verschlußplatte 17 hindurch zur Außenseite des Codiertasters hindurchgeführt.

Am inneren Ende der Gehäuseausnehmung 6, dem in den Fig. 2, 4 und 4a oben dargestellten Ende, ist ein als O-Ring ausgebildeter Dichtungsring 20 auf die Rastwelle 5 aufgesetzt. Er ist zwischen einem radial vorstehenden Ansatz 21 der Rastwelle 5 und der die Gehäuseausnehmung 6 flankierenden Gehäusestirnseite 22 wirksam, die in den Fig. 2, 4 und 4a den oberen Abschluß des Gehäuses 1 bildet.

Zur Einstellung der gewünschten Codierung wird die Rastwelle 5 bei in ihrer Inaktivstellung befindlicher Codierscheibe 4, wie in Fig. 2 dargestellt ist, in die gewünschte Auswahlposition gedreht, in der die Rastfeder 9 in eine Zahnlücke der Rastverzahnung 8 einfällt und diese in der Wahlposition hält. Die Rastfeder ist als Blattfeder 9 ausgebildet. Sie ruht gegen Verschiebung in Achs- oder Verstellachsenrichtung 11 gesichert mit ihren beiden Federenden 23 in an die Innenseiten von Gehäuseecken angeformten Gehäuseausnehmungen 24. Die Blattfedern 9 sind dabei von einer solchen Länge, daß sie zusätzlich zwischen zwei einander gegenüberliegenden Gehäuseseiten verspannbar ist (s. Schnitt A-A von Fig. 2 in Fig. 3).

Zwischen den beiden Federenden 23 ist jede Blattfeder 9 mit einer in Richtung auf die Rastverzahnung 8 der Rastwelle 5 vorstehenden Rastnocke 25 versehen, die in die Zahnlücken der Rastverzahnung 8 einfällt.

Beim Ausführungsbeispiel (Fig. 3) sind an zwei einander diametral gegenüberliegenden Gehäuseseiten zwei solche Blattfedern 9 vorhanden, die synchron in jeweils eine Rastlücke der Rastverzahnung 8 einfallen oder über einen Rastzahn hinübergleiten. Die Rastnocken 25 weisen eine teilkugelähnliche, abgerundete Oberflächenform auf, die für die nachstehend im einzelnen beschriebene Verschiebewirkung bzw. für die selbsttätige Rückschiebung der Rastwelle 5 in ihre potentialfreie Wählstellung mitursächlich ist.

Die Drehung der Rastwelle 5 geschieht potentialfrei in der in Fig. 2 gezeigten Inaktivstellung der Codierscheibe 4. Zum Aktivieren des Codiertasters wird seine Rastwelle 5 in Druckrichtung 26 nach unten gedrückt. Dadurch wird die Rastwelle 5 aus ihrer Inaktivstellung in die aus den Fig. 4 und 4a ersichtliche Aktivstellung bzw. Schaltstellung überführt. In dieser Schaltstellung beaufschlagt die Codierscheibe 4 mit ihren Kontaktbahnen 27 die der Codierung entsprechenden Kontakte 18 des plattenförmigen Kontaktträgers 3.

Beim dargestellten Ausführungsbeispiel handelt es sich um einen Taster, der nur solange in Kontaktstellung verharrt, wie in Druckrichtung 26 ein Tastdruck auf die Rastwelle 5 ausgeübt wird. Wird der Druck in Druckrichtung 26 fortgenommen, so drückt die Druckfeder 12 mit Unterstützung durch die Rastfedern 9 die Rastwelle 5 aus ihrer aktiven Schaltstellung (Fig. 4, 4a) zurück in die potentialfreie inaktive Ausgangsstellung (Fig. 2). Es ist aber auch eine Variante denkbar, bei der die Rastwelle 5 in ihrer gedrückten Stellung verharrt, wenn der Druck in Druckrichtung 26 weggenommen wird. Dann wäre der Erfindungsgegenstand nicht mehr als Taster, sondern als Codierschalter anzusprechen.

Zur Unterstützung der selbsttätigen Rückbewegung in die potentialfreie Ausgangs- oder Inaktivstellung von Fig. 2 ist ein Ringbereich 28 der Rastwelle 5 oberhalb seiner Rastverzahnung 8 im Beaufschlagungsbereich der Rastnocken 25 nach Art eines sich in Richtung auf die Stirnfläche 22 erweiternden Konusmantels ausgeführt. Dadurch wird gewissermaßen eine Keilschräge gebildet, durch die seitens der Rastnocken 25 ein entgegen der Druckrichtung 26 auf die Rastwelle 5 einwirkender Rückstelldruck ausgeübt wird.

Es ist denkbar, eine Paarung der Kontaktanschlüsse 19 zur permanenten Spannungszufuhr für eine im Griffteil der Rastwelle 5 befindliche Leuchtdiode oder dergleichen zu nutzen, die eine Funktionsstellung des Tasters oder Schalters, z. B. dessen Aktivstellung signalisiert.

### Bezugszeichenliste

- 1: Gehäuse
- 2: Gehäuseöffnung
- 3: Kontaktträger
- 4: Codierscheibe
- 5: Rastwelle
- 6: Gehäusedurchlaß
- 7: Rändelung
- 8: Rastverzahnung
- 9: Rastfeder
- 10: Gehäuseinnenwand
- 11: Längsachse
- 12: Druckfeder
- 13: Sackloch
- 14: Führungsstift
- 15: oberes Ende
- 16: Stempel
- 17: Verschlußplatte
- 18: Kontakt
- 19: Anschlußende
- 20: Dichtungsring
- 21: Ansatz
- 22: Gehäusestirnseite
- 23: Federende
- 24: Gehäuseausnehmung
- 25: Rastnocke
- 26: Druckrichtung
- 27: Kontaktbahn
- 28: Ringbereich
- 29: isolierender Oberflächenbereich

## Patentansprüche

1. Codiervorrichtung mit einem Kontaktträger und einer Codierscheibe, die in einer Mehrzahl von Drehstellungen relativ zum Kontaktträger zur Einstellung entsprechender Codierungen einstellbar ist,
dadurch gekennzeichnet,
daß die Codierscheibe (4) zwischen einer Inaktivstellung, in der die Codierscheibe (4) vom Kontaktträger (3) beabstandet und keine Codierung wirksam ist, und einer Aktivstellung verstellbar ist, in der über die Codierscheibe (4) eine der Drehstellung der letzteren entsprechende Codierung auf dem Kontaktträger (3) eingestellt ist, und
daß die Codierscheibe (4) zur Codierauswahl in der Inaktivstellung in verschiedene Drehstellungen einstellbar ist.

2. Codiervorrichtung nach Anspruch 1,
dadurch gekennzeichnet,
daß die Codierscheibe (4) zur Drehverstellung koaxial mit einer Drehwelle (5) verbunden ist, mittels der die Codierscheibe (4) vorzugsweise zwischen der Inaktiv- und der Aktivstellung verstellbar ist.

3. Codiervorrichtung nach Anspruch 2,
dadurch gekennzeichnet,
daß die Drehwelle (5) an einem freien Betätigungsende mit einer Rändelung (7) versehen oder als Vielkantwelle ausgebildet ist.

4. Codiervorrichtung nach einem der vorhergehenden Ansprüche,
dadurch gekennzeichnet,
daß die Codierscheibe (4) in wenigstens einer Drehstellung verrastbar ist.

5. Codiervorrichtung nach Anspruch 4,
dadurch gekennzeichnet,
daß eine der Codierscheibe (4) zugeordnete Rastverzahnung (8) vorgesehen ist, die mit zumindest einer Rastfeder (9) zum Verrasten der Codierscheibe (4) in der wenigstens einen Drehstellung zusammenwirkt.

6. Codiervorrichtung nach Anspruch 5,
dadurch gekennzeichnet,
daß zwei Rastfedern vorgesehen sind, die vorzugsweise als Blattfedern (9) ausgebildet sind.

7. Codiervorrichtung nach Anspruch 5 oder 6,
dadurch gekennzeichnet,
daß an der Rastfeder (9) zumindest eine Rastnocke (25) vorgesehen ist, die bevorzugt eine mit der Rastverzahnung (8) zusammenwirkende teilkugelkugelähnlich abgerundete Oberflächenform hat.

8. Codiervorrichtung nach Anspruch 2 und einem der Ansprüche 5 bis 7,
dadurch gekennzeichnet,
daß die Rastverzahnung (8) an der Drehwelle (5) vorgesehen ist.

9. Codiervorrichtung nach einem der vorhergehenden Ansprüche,
dadurch gekennzeichnet,
daß die Codierscheibe (4) in ihre Inaktivstellung vorgespannt ist.

10. Codiervorrichtung nach Anspruch 9,
dadurch gekennzeichnet,
daß die Codierscheibe (4) durch eine Druckfeder (12), bevorzugt eine Schraubendruckfeder, in ihre Inaktivstellung vorgespannt ist.

11. Codiervorrichtung nach den Ansprüchen 2 und 10,
dadurch gekennzeichnet,
daß die Druckfeder (12) einerseits am Ende eines Sackloches (13) in der Drehwelle (5) und andererseits an einem insbesondere in das Sackloch (13) eingreifenden Führungsstift (14) abgestützt ist, der bezüglich des Kontaktträgers (3) ortsfest ist.

12. Codiervorrichtung nach Anspruch 11,
dadurch gekennzeichnet,
daß der Führungsstift (14) ein kolbenartiges oberes Ende (15), das innerhalb des Sackloches (13) längsverschiebbar geführt ist und an dem sich die Druckfeder (12) abstützt, und einen unteren Stempel (16) aufweist, der durch die Codierscheibe (4) koaxial hindurchgeht und insbesondere an dem Kontaktträger (3) abgestützt ist.

13. Codiervorrichtung nach Anspruch 5 und einem der Ansprüche 9 bis 12,
dadurch gekennzeichnet,
daß die Codierscheibe (4) durch die wenigstens eine Rastfeder (9) in ihre Inaktivstellung vorgespannt ist.

14. Codiervorrichtung nach den Ansprüchen 2 und 13,
dadurch gekennzeichnet,
daß die Drehwelle (5) vorzugsweise als konusförmiger Ringbereich (28) ausgebildete Auflaufeinrichtungen enthält, die mit der wenigstens einen Rastfeder (9) so zusammenwirken, daß die Codierscheibe (4) dadurch in ihre Inaktivstellung vorgespannt ist.

15. Codiervorrichtung nach einem der vorhergehenden Ansprüche,
dadurch gekennzeichnet,
daß die Codierscheibe (4) in ihrer Aktivstellung verrastbar ist.

16. Codiervorrichtung nach einem der vorhergehenden Ansprüche,
dadurch gekennzeichnet,
daß ein Gehäuse (1) enthalten ist, das eine Gehäuseöffnung (2) zum Aufnehmen der Codierscheibe (4) und ggf. einen der Gehäuseöffnung (2) insbesondere gegenüberliegenden Gehäusedurchlaß (6) zur Durchführung der Drehwelle (5) nach außerhalb des Gehäuses (1) aufweist.

17. Codiervorrichtung nach Anspruch 16,
dadurch gekennzeichnet,
daß das Gehäuse (1) eine Verschlußplatte (17) enthält, an der der Kontaktträger (3) angebracht ist und die die Gehäuseöffnung (2) zumindest im wesentlichen verschließt, und
daß vorzugsweise an der gehäuseinneren Oberfläche des Kontaktträgers (3) vorgesehene Kontakte (18) mit ihren Anschlußenden (19) durch die Verschlußplatte (17) hindurch nach außerhalb des Gehäuses (1) geführt sind.

18. Codiervorrichtung nach Anspruch 16 oder 17,
dadurch gekennzeichnet,
daß eine Dichtung, vorzugsweise in Form eines Dichtungsrings (20), vorgesehen ist, die das Gehäuse (1) gegen die Drehwelle (5) abdichtet.

19. Codiervorrichtung nach Anspruch 18,
dadurch gekennzeichnet,
daß die Dichtung (20) zwischen einem radial vorstehenden Ansatz (21) der Drehwelle (5) und einer die Gehäuseausnehmung (6) flankierenden Gehäusestirnseite (22) wirksam ist.

20. Codiervorrichtung nach einem der Ansprüche 16 bis 19 und Anspruch 6,
dadurch gekennzeichnet,
daß die wenigstens eine Blattfeder (9) an einer Gehäuseinnenwand (10) der Gehäuseöffnung (2) in Richtung auf die Rastverzahnung (8) vorstehend fixiert ist.

21. Codiervorrichtung nach Anspruch 20,
dadurch gekennzeichnet,
daß die wenigstens eine Blattfeder (9) mit ihren beiden Federenden (23) in an die Innenseiten von Gehäuseecken angeformten Gehäuseausnehmungen (24) gegen Verschiebung in Verstellachsenrichtung (11) gesichert sind.

22. Codiervorrichtung nach einem der vorhergehenden Ansprüche,
dadurch gekennzeichnet,
daß die Codierscheibe (4) eine dem Kontaktträger (3) zugewandte Kontaktoberfläche mit zumindest einer Kontaktbahn (27) und im übrigen isolierenden Oberflächenbereichen (29) aufweist, so daß bei einer Verstellung der Codierscheibe (4) aus der Inaktiv- in die Aktivstellung in Druckrichtung (26) die Codierscheibe (4) mit ihrer wenigstens einen Kontaktbahn (27) der Codierung entsprechende Kontakte (18) des Kontaktträgers (3) beaufschlagt.

23. Codiervorrichtung nach einem der vorhergehenden Ansprüche,
dadurch gekennzeichnet,
daß der Kontaktträger (3) zumindest teilweise flexibel ist und/oder vorzugsweise wenigstens teilweise flexible Kontakte (18) enthält, gegen die die Codierscheibe (4) in der Aktivstellung in einer Druckrichtung (26) andrückbar ist.

24. Codiervorrichtung nach einem der vorhergehenden Ansprüche,
dadurch gekennzeichnet,
daß Anzeigeneinrichtungen vorgesehen sind, insbesondere in Form einer oder mehrerer Leuchtdioden und vorzugsweise ggf. im Bereich des freien Endes der Drehwelle (5), wobei die Anzeigeneinrichtungen zumindest einen Betriebszustand der Codiervorrichtung signalisieren.
